# EUROPEAN PATENT SPECIFICATION

(11) **EP 0 849 152 B1**
(45) Date of publication and mention of the grant of the patent: **04.02.2004**
(21) Application number: 97309605.0
(22) Date of filing: 28.11.1997
(51) Int. Cl.: B62L 1/14

(54) **Spring retaining apparatus for a bicycle brake**
Federfesthaltvorrichtung für eine Fahrradbremse
Dispositif de retenue d'un ressort pour frein de bicyclette

(30) Priority: 19.12.1996 US 772084
(43) Date of publication of application: 24.06.1998
(73) Proprietor: Shimano Inc., Osaka 590-0824 (JP)
(72) Inventor: Takizawa, Shinichi, Sakai-shi, Osaka 593 (JP)
(74) Representative: Pacitti, Paolo

(56) References cited:
- EP-A- 0 432 268
- EP-A- 0 494 630
- DE-U- 9 417 115

## Description

### BACKGROUND OF THE INVENTION

The present invention is directed to braking devices for bicycles and, more particularly, to a cantilever-type brake which is provided with a pair of brake arms independently rotatably supported to respective fixing bases, wherein return springs are provided between the brake arms and the fixing bases for biasing the brake arms in the direction of enlarging a distance between the respective brake shoes and the wheel rim.

A brake arm apparatus according to preamble of claim 1 is known from EP-A-432 268. This known brake arm apparatus includes a sleeve retaining one and of the return spring, which sleeve is only partly received with one of its ends within the brake's arm fitting bore. As a result, scope for movement of the components during braking is still present.

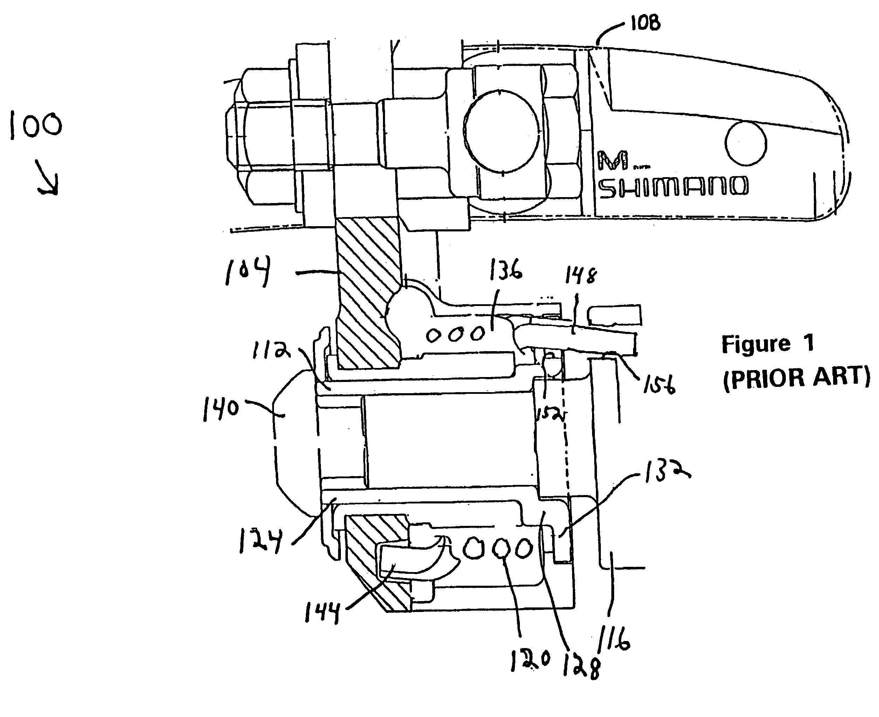

Figure 1 discloses a known cantilever-type caliper brake 100 wherein a brake arm 104 having a brake shoe 108 is rotatably supported on a bushing 112 which, in turn, is coaxially mounted to a fixing base 116 welded to a front fork or a rear fork of the bicycle frame. Between the fixing base 116 and the brake arm 104 is interposed a return spring 120 for biasing the brake arm away from the wheel.

The bushing 112 mounted between the brake arm 104 and the fixing base 116 ordinarily has one end 124 which extends entirely through the brake arm 104 and another end 128 which includes a radially extending portion 132 for covering a brake arm cavity 136 which houses the return spring 120. A bolt 140 threads into the fixing base 116 and abuts against the first end 124 of the bushing 112 for retaining the brake arm 104 to the fixing base 116. The return spring 120 typically is formed as a coil spring which is mounted around the fixing base 116. One end 144 of the return spring 120 is retained to the brake arm 104, and the other end 148 of the return spring 120 is inserted through a hole 152 in the radially extending portion 132 of the bushing 112 and through a hole 156 in the fixing base 116.

Since the bolt 140 used to fix the brake arm 104 to the fixing base 116 contacts the first end 124 of the bushing 112, the bushing 112 tends to twist or rotate around the fixing base 116 when the bolt 140 is tightened. Twisting of the bushing 112 is undesirable because, since the second end 148 of the spring 120 is retained in the radially extending portion 132 of the bushing 112, the spring tension will change and make proper alignment of the brake shoe 108 difficult. The second end 148 of the return spring 120, which extends through the radially extending portion 132 of the bushing 124 and into the fixing base 116, is intended to prevent such twisting by locking the bushing 112 to the fixing base 116. However, when a strong tightening force is applied to the bolt 140, the radially extending portion 132 of the bushing 112 tends to bend or shear off the second end 148 of the return spring 120. This, in turn, destroys the ability of the second end 148 of return spring 120 to prevent twisting of the bushing 112.

Another disadvantage of conventional brake devices is that the hole 156 in the fixing base 116 into which the second end 148 of the return spring 120 is inserted is relatively small so as not to adversely affect the size or strength of the fixing base 116. As a result, the thickness of the return spring 120, and particularly the second end 148 of the return spring 120, must be limited accordingly. Thin return springs fatigue very easily and cannot exert a strong biasing force. Thus, such a limitation on the thickness of the return spring 120 makes it very difficult, if not impossible, to make heavy duty brake devices with thick return springs.

Yet another disadvantage of conventional brake devices is that the hole 156 in the fixing base 116 is usually placed in close proximity to the fixing base shaft on which the brake shoe is mounted. This, in turn, limits the cylindrical diameter of the return spring which further decreases the ability of the return spring to resist fatigue. The brake manufacturer must take all these factors into consideration when designing the brake, so an optimum brake design cannot always be achieved.

### SUMMARY OF THE INVENTION

The present invention is directed to a brake arm apparatus in accordance with Claim 1. In preferred embodiments a bushing sandwiched between the brake arm and the fixing base is nonrotatably fixed to the fixing base through a fixing member without using the second end of the return spring, and wherein the second end of the return spring may be retained in the bushing by a structure which does not limit the thickness of the return spring. In one embodiment of the present invention, a brake arm apparatus includes a brake arm having a fitting bore; a fixing sleeve having a first end and a second end, wherein the first end of the fixing sleeve is disposed in the fitting bore for pivotally supporting the brake arm; and a fixing member attached to the second end of the fixing sleeve for fixing the fixing sleeve to a fixing base attached to a bicycle frame. A return spring is disposed between the brake arm and the second end of the fixing sleeve, wherein a first end of the return spring is retained at the brake arm. The second end of the fixing sleeve includes a second spring end retainer for retaining a second end of the return spring independently of the fixing base.

In a more specific embodiment, the second end of the fixing sleeve includes a radially extending member having one or more holes positioned at the extreme outer peripheral edge of the radially extending member into which the second spring end may be inserted. A fixing pin connects the second end of the fixing sleeve to the fixing base. If desired, the fixing pin may be attached to the radially extending member and extend into a hole formed in the fixing base. Accordingly, the fixing pin may be formed from a very strong material to withstand large tightening forces of the attachment bolt, and the second spring end does not have to couple the fixing sleeve to the fixing base. The openings in the radially extending portion of the fixing sleeve may be made as large as desired to accommodate very thick return springs which, in turn do not fatigue easily and can provide strong biasing forces. The return springs also can have any desired cross sectional shape, e.g., square. Also, since the openings may be positioned on the extreme outer peripheral edge of the radially extending member, the return spring may have a large diameter to further resist fatigue. The brake manufacturer does not have to be concerned about the specific structure of the holes in the fixing base with regard to the return spring. Thus, the tension characteristics of the return spring can be determined independently of the construction of the fixing base.

### BRIEF DESCRIPTION OF THE DRAWINGS

Figure 1 is a side cross sectional view of a prior art brake apparatus;
Figure 2 is a front view of a particular embodiment of a bicycle brake;
Figure 3 is a side cross sectional view of a lower portion of the right-hand side brake arm assembly shown in Figure 2;
Figure 4 is a side cross sectional view of a lower portion of the left-hand side brake arm assembly shown in Figure 2; and
Figure 5 is an exploded view of the brake arm assembly shown in Figure 3.

### DETAILED DESCRIPTION OF THE EMBODIMENTS

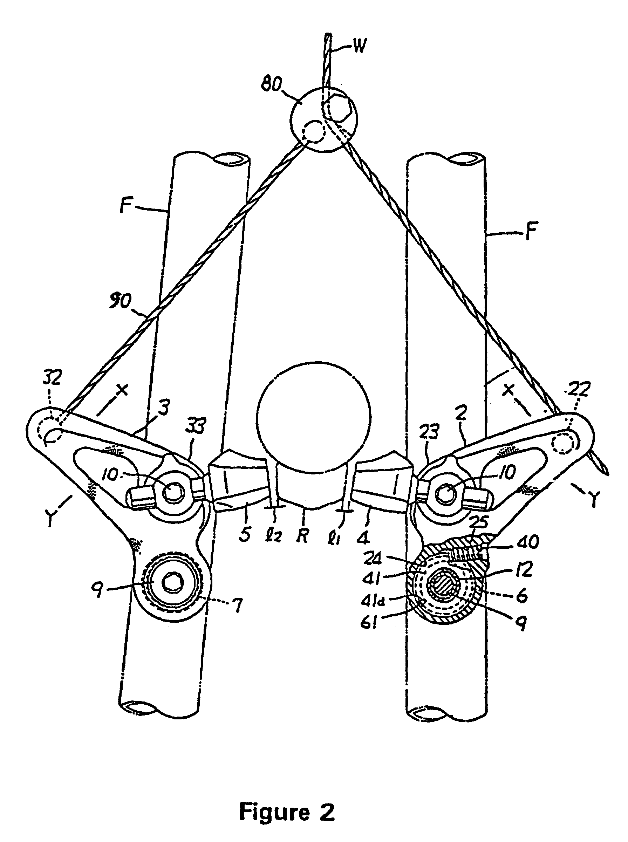

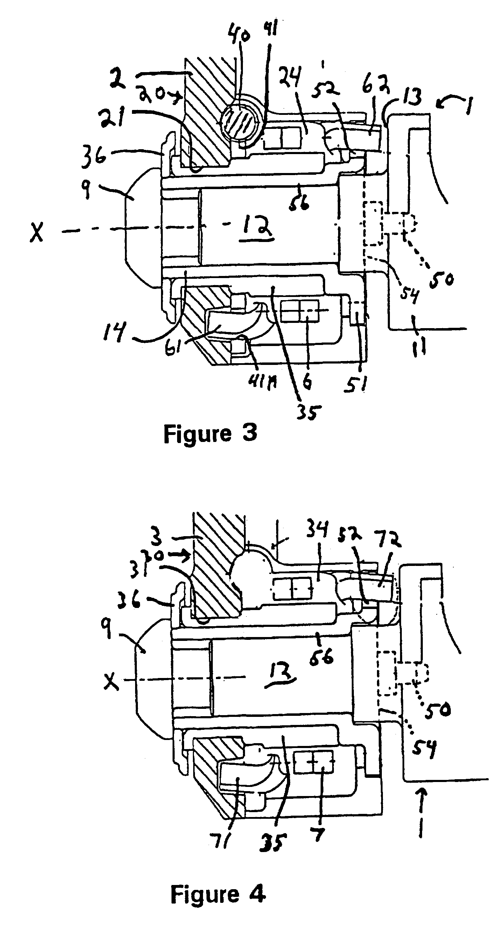

In Figures 2-5, a cantilever-type caliper brake is shown and constructed such that a pair of first and second brake arms 2 and 3 having brake shoes 4 and 5 each are rotatably supported to a pair of fixing bases 1. Fixing bases 1 are fixed by welding to a front fork F or a rear fork of the bicycle frame. Between the fixing bases 1 and the brake arms 2 and 3 are interposed a pair of first and second return springs 6 and 7, respectively, to bias the brake arms 2 and 3 in the direction of enlarging the distance between the brake shoes 4 and 5. A control wire W is pulled to rotate the brake arms 2 and 3 each in the direction of the arrow X in Figure 2 against the biasing force of return springs 6 and 7, thereby exerting a braking action. Thereafter, the wire W is loosened to enable each brake arm 2 or 3 to rotate by the biasing force of each return spring 6 or 7 in the direction of the arrow Y, thereby restoring the brake arms 2 and 3 to their rest position.

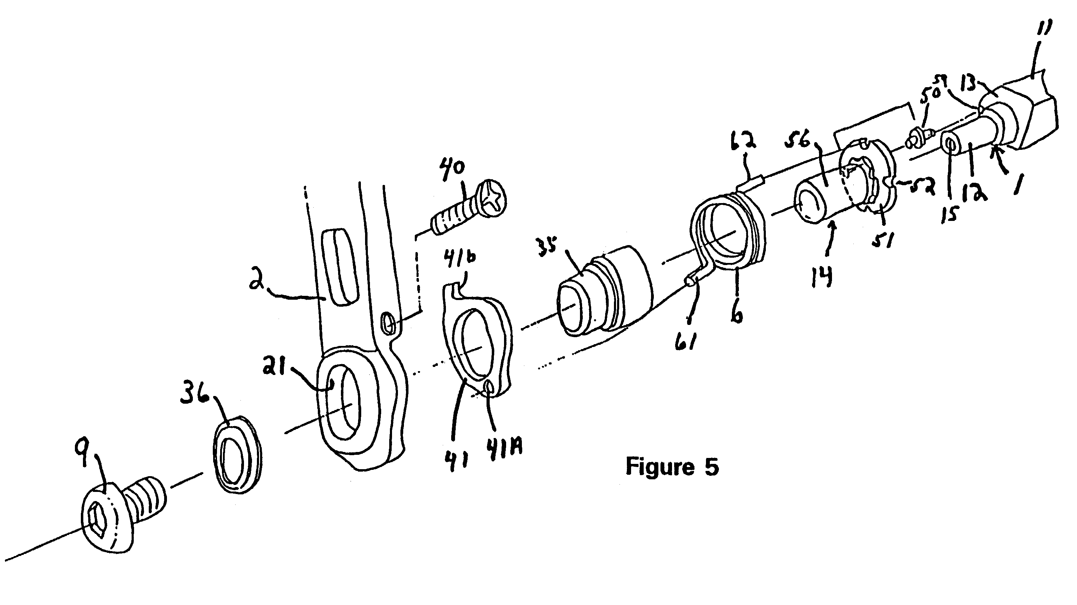

The fixing bases 1 each comprise a mounting section 11 and a tubular pivot shaft 12 that projects from a surface 13 of mounting section 11. Mounting section 11 is adapted to be affixed to the frame F by welding or some other means. The tubular pivot shafts 12 are provided at their inner peripheries with screw threads 15 (Figure 5). One or more holes 59 are formed in surface 13 for reasons discussed below. A fixing sleeve 14 is fitted on the outer peripheral surface of each pivot shaft 12. Fixing sleeve 14 includes a generally cylindrical tubular member 56 which extends along a longitudinal axis X. A radially extending flange-shaped or annular member 51 is integrally formed as one piece with or is fitted at one end of fixing sleeve 14 (e.g., by welding or by some other suitable bonding method) and extends generally perpendicularly to the longitudinal axis X. Annular member 51 includes a plurality of openings or grooves 52 for reasons discussed below. A fixing pin 50 nonrotatably couples annular member 51, and hence fixing sleeve 14, to fixing base 1. In this embodiment, fixing pin 50 is riveted or otherwise bonded to a side face 54 of annular member 51, extends in the direction of the longitudinal axis X perpendicular to side face 54, and is shaped for extending into a hole 59 formed in surface 13 of fixing base 1.

The brake arms 2 and 3 comprise bell cranks, each bent at an intermediate portion. Brake arms 2 and 3 are provided at one end with pivot portions 20 and 30 having fitting bores 21 and 31, at their other end with wire mounting portions 22 and 32, and at their intermediate bent portions with brake shoe mounting portions 23 and 33 respectively. In this embodiment, fitting bores 21 and 31 are fitted onto the outer peripheries of tubular bushings 35 which, in turn, are mounted to the outer peripheries of fixing sleeves 14 so that each cylindrical portion 56 extends entirely through the brake arms 2 and 3. Screws 9 screw into the threaded bores 15 in the pivot shafts 12 to mount the brake arms 2 and 3 rotatably thereto through spacers 36. The brake shoes 4 and 5 are mounted on the shoe mounting portions 23 and 33 though clamp shafts 10. At the pivot portions 20 and 30 are provided cavities 24 and 34, respectively, in continuation of one end of fitting bores 21 and 31. Cavities 24 and 34 open toward the fixing bases 1, and the return springs 6 and 7 are housed in the cavities 24 and 34, respectively. Annular members 51 help to close the ends of cavities 24 and 34. The control wire W, which is connected at one end to a brake lever, is connected at its other end to the wire mounting portion 22 at the first brake arm 2. A connecting wire 90 connects the wire mounting portion 32 at the second brake arm 3 to a carrier 80 securing the wire W.

The return springs 6 and 7 comprise coil springs which coil around the cylindrical portions 56 of their respective fixing sleeve 14 and are both provided at respective ends with first spring ends 61 and 71 and second spring ends 62 and 72. First spring ends 61 and 71 are retained at the brake arms 2 and 3, and second spring ends 62 and 72 are inserted into a respective opening 52 in annular members 51. In this embodiment, between the first spring end 61 of the first return spring 6 and the first brake arm 2 is provided a biasing force adjusting means for adjusting a biasing force of the first return spring 6 to the first brake arm 2 so that it is equalized with the second return spring 7. The biasing force adjusting means comprises an adjuster 40 formed preferably of a screw and a substantially disc-shaped annular retainer 41 mounted around the cylindrical portion 56 of fixing sleeve 14. Retainer 41 is provided with a retaining portion 41a to retain the first spring end 61, and it is rotatable by thrust of the adjuster 40 to adjust the position of the first spring end 61. More specifically, the first brake arm 2 is provided with a threaded bore 25 extending tangentially of the cavity 24 and open at the outside surface of the first brake arm 2, with adjuster 40 screwing into the threaded bore 25. The retainer 41 is housed rotatably in the cavity 24, and first spring end 61 is retained to the retaining portion 41a. The retainer 41, as shown in Figure 5, is provided with a striking face 41b for abutting against the utmost end of the adjuster 40 and positioned diametrically symmetrically with the retaining portion 41a. Adjuster 40 is rotated to rotate retainer 41 and hence shift the first spring end 61 with respect to the first brake arm 2, thereby adjusting the biasing force of the first return spring 6 of the first brake arm 2 with respect to the second return spring 7.

By using a separate mounting pin 50 to fix fixing sleeve 14 relative to fixing base 1, no shear force is imparted to spring ends 62 or 72. The brake manufacturer does not have to be concerned about the specific structure of the holes in the fixing base with regard to the return spring. Thus, the tension characteristics of the return spring can be determined independently of the construction of the fixing base. Also, fixing pin 50 may be formed of a very strong material to withstand much greater torque from screws 9. Holes 52 in annular member 51 may be made much larger than holes 59 in fixing base 1 and with varying shapes to accommodate much thicker return springs (or return springs of any desired cross sectional shape), and the position of holes 52 at the outer peripheral edge of annular member 51 accommodate return springs with a large diameter. As a result, greater flexibility in the selection of components is available, and a much sturdier structure can be manufactured.

While the above is a description of various embodiments of the present invention, further modifications may be employed without departing from the scope of the present invention. For example, the biasing force adjusting means may use adjuster 40 only so that the utmost end thereof may abut against the first spring end 61, or the adjuster 40 may be omitted and retainer 41 may be provided with a dial operable from the exterior to thereby directly rotate the retainer 41. Also alternatively, a cam body may be used.

Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A brake arm apparatus comprising:
a brake arm (2,3) having a fitting bore (21,31);
a fixing sleeve (14) having a first end and a second end, wherein the first end is disposed in the fitting bore (21,31) for pivotally supporting the brake arm (2,3);
a fixing member (50) attached to the second end of the fixing sleeve (14) for fixing the fixing sleeve (14) to a fixing base (1) attached to a bicycle frame;
a return spring (6,7) disposed between the brake arm (2,3) and the second end of the fixing sleeve (14);
wherein a first end (61,71) of the return spring (6,7) is retained at the brake arm (2,3); and
wherein the second end of the fixing sleeve (14) includes a second spring end retainer (52) for retaining a second end (62,72) of the return spring (6,7) independently of the fixing base;
**characterised in that** the fixing sleeve (14) includes a generally cylindrical portion (56) which extends entirely through the brake arm (2).

2. Apparatus according to claim 1, wherein the return spring (6,7) is coiled around the cylindrical portion (56) of the fixing sleeve (14).

3. Apparatus according to either preceding claim, wherein the fixing member (50) comprises a pin.

4. Apparatus according to any preceding claim, wherein the second end of the fixing sleeve (14) includes a radially extending member (51), and wherein the second spring end retainer (52) is disposed at the radially extending member (51).

5. Apparatus according to claim 4, wherein the radially extending member (51) includes an opening (52) into which the second spring end (62,72) is inserted, and wherein the opening forms the second spring end retainer (52).

6. Apparatus according to claim 5, wherein the radially extending member (51) includes a plurality of the openings (52), each of which is adapted to receive the second spring end (62,72) therein.

7. Apparatus according to any of claims 4 to 6, wherein the fixing member (50) comprises a fixing pin (50).

8. Apparatus according to any of claims 4 to 7, wherein the fixing sleeve (14) extends along a longitudinal axis (X), and wherein the radially extending member (51) extends generally perpendicularly to the longitudinal axis (X).

9. Apparatus according to claim 8, wherein the fixing member (50) extends in a direction of the longitudinal axis (X).

10. Apparatus according to any of claims 4 to 9, wherein the fixing member (50) extends generally perpendicularly to a side face (54) of the radially extending member (51).

11. Apparatus according to any of claims 4 to 10, wherein the radially extending member (51) is integrally formed as one piece with the cylindrical portion (56) .

12. Apparatus according to any preceding claim, including a spring bias adjusting member (41) disposed in the brake arm (2), wherein the spring bias adjusting member (41) includes a first spring end retainer (41a) for retaining the first end (61) of the return spring (6) .

13. Apparatus according to claim 12, wherein the spring bias adjusting member (41) comprises an annular member (41) mounted around the cylindrical portion (56) of the fixing sleeve (14).

14. Apparatus according to claim 13, wherein the annular member includes an opening (41a) into which the first spring end (61) is inserted, and wherein the opening (41a) forms the first spring end retainer (41a).

15. Apparatus according to either of claims 13 or 14, including an adjusting screw (40) threaded into the brake arm (2) for contacting an abutment (41b) formed on the annular member (41) for adjusting a rotational position of the annular member (41).

16. Apparatus according to any preceding claim, wherein the fixing sleeve (14) is substantially tubular.

17. Apparatus according to any preceding claim, wherein the first end of the fixing sleeve (14) extends entirely through the brake arm (2,3).

18. Apparatus according to any preceding claim, wherein the fixing base (1) includes a tubular shaft (12) having a threaded inner peripheral surface (15).

19. Apparatus according to claim 18, wherein the fixing sleeve (14) is coaxially mounted around the tubular shaft (12) of the fixing base (1).

20. Apparatus according to claim 18 or claim 19, wherein the return spring (6, 7) is coiled around the fixing sleeve (14) between the brake arm (2,3) and the fixing base (1).

21. Apparatus according to any one of claims 18 to 20, wherein the fixing member (50) extends into a hole (59) formed in the fixing base (1).

## Patentansprüche

1. Bremsarmvorrichtung, umfassend:
einen Bremsarm (2, 3) mit einer Passbohrung (21, 31);
eine Fixierhülse (14), die ein erstes Ende und eine zweites Ende aufweist, wobei das erste Ende in der Passbohrung (21, 31) zur schwenkbaren Lagerung des Bremsarms (2, 3) angeordnet ist;
ein Fixierelement (50), das am zweiten Ende der Fixierhülse (14) angebracht ist, um die Fixierhülse (14) an einem Fixiergrundabschnitt (1) zu befestigen, der an einem Fahrradrahmen angebracht ist;
eine Rückholfeder (6, 7), die zwischen dem Bremsarm (2, 3) und dem zweiten Ende der Fixierhülse (14) angeordnet ist;
wobei ein erstes Ende (61, 71) der Rückholfeder (6, 7) am Bremsarm (2, 3) gehalten wird; und
wobei das zweite Ende der Fixierhülse (14) eine zweite Federendenhalteeinrichtung (52) enthält, um ein zweites Ende (62, 72) der Rückholfeder (6, 7) unabhängig vom Fixiergrundabschnitt zu halten;
**dadurch gekennzeichnet, dass** die Fixierhülse (14) einen allgemein zylindrischen Abschnitt (56) enthält, der sich ganz durch den Bremsarm (2) erstreckt.

2. Vorrichtung nach Anspruch 1, bei der die Rückholfeder (6, 7) um den zylindrischen Abschnitt (56) der Fixierhülse (14) gewickelt ist.

3. Vorrichtung nach einem der vorherigen Ansprüche, bei der das Fixierelement (50) einen Stift umfasst.

4. Vorrichtung nach einem der vorherigen Ansprüche, bei der das zweite Ende der Fixierhülse (14) ein sich radial erstreckendes Element (51) enthält, und bei der die zweite Federendenhalteeinrichtung (52) am sich radial erstreckenden Element (51) angeordnet ist.

5. Vorrichtung nach Anspruch 4, bei der das sich radial erstreckende Element (51) eine Öffnung (52) enthält, in die das zweite Federende (62, 72) eingeschoben ist, und wobei die Öffnung die zweite Federendenhalteeinrichtung (52) bildet.

6. Vorrichtung nach Anspruch 5, bei der das sich radial erstreckende Element (51) eine Mehrzahl Öffnungen (52) enthält, von denen jede ausgelegt ist, das zweite Federende (62, 72) darin aufzunehmen.

7. Vorrichtung nach einem der Ansprüche 4 bis 6, bei der das Fixierelement (50) einen Fixierstift (50) umfasst.

8. Vorrichtung nach einem der Ansprüche 4 bis 7, bei der die Fixierhülse (14) sich entlang einer Längsachse (X) erstreckt, und wobei das sich radial erstreckende Element (51) sich allgemein senkrecht zur Längsachse (X) erstreckt.

9. Vorrichtung nach Anspruch 8, bei der sich das Fixierelement (50) in Richtung der Längsachse (X) erstreckt.

10. Vorrichtung nach einem der Ansprüche 4 bis 9, bei der sich das Fixierelement (50) allgemein senkrecht zu einer Seitenfläche (54) des sich radial erstreckenden Elements (51) erstreckt.

11. Vorrichtung nach einem der Ansprüche 4 bis 10, bei der das sich radial erstreckende Element (51) integral einstückig mit dem zylindrischen Abschnitt (56) ausgebildet ist.

12. Vorrichtung nach einem der vorherigen Ansprüche, die ein Federvorspannungseinstellelement (41) enthält, das im Bremsarm (2) angeordnet ist, wobei das Federvorspannungseinstellelement (41) eine erste Federendenhalteeinrichtung (41a) zum Halten des ersten Endes (61) der Rückholfeder (6) enthält.

13. Vorrichtung nach Anspruch 12, bei der das Federvorspannungseinstellelement (41) ein ringförmiges Element (41) umfasst, das um den zylindrischen Abschnitt (56) der Fixierhülse (14) herum befestigt ist.

14. Vorrichtung nach Anspruch 13, bei der das ringförmige Element eine Öffnung (41 a) enthält, in die das erste Federende (61) eingeschoben ist, und wobei die Öffnung (41a) die erste Federendenhalteeinrichtung (41a) bildet.

15. Vorrichtung nach Anspruch 13 oder 14, die zum Einstellen der Drehposition des ringförmigen Elements (41) eine Einstellschraube (40) enthält, die in den Bremsarm (2) zum Berühren einer auf dem ringförmigen Element (41) ausgebildeten Anschlagfläche (41b) eingeschraubt ist.

16. Vorrichtung nach einem der vorherigen Ansprüche, bei der die Fixierhülse (14) im Wesentlichen röhrenförmig ist.

17. Vorrichtung nach einem der vorherigen Ansprüche, bei der das erste Ende der Fixierhülse (14) sich ganz durch den Bremsarm (2, 3) erstreckt.

18. Vorrichtung nach einem der vorherigen Ansprüche, bei der der Fixiergrundabschnitt (1) eine röhrenförmige Welle (12) enthält, die eine periphere Innenfläche mit Gewinde (15) aufweist.

19. Vorrichtung nach Anspruch 18, bei der die Fixierhülse (14) koaxial um die röhrenförmige Welle (12) des Fixiergrundabschnitts (1) herum befestigt ist.

20. Vorrichtung nach Anspruch 18 oder Anspruch 19, bei der die Rückholfeder (6, 7) um die Fixierhülse (14) zwischen dem Bremsarm (2, 3) und dem Fixiergrundabschnitt (1) gewickelt ist.

21. Vorrichtung nach einem der Ansprüche 18 bis 20, bei der das Fixierelement (50) sich in ein Loch (59) hinein erstreckt, das im Fixiergrundabschnitt (1) ausgebildet ist.

## Revendications

1. Dispositif de bras de frein comprenant :
un bras de frein (2, 3) ayant un alésage d'adaptation (21, 31)
une gaine de fixation (14) ayant une première extrémité et une seconde extrémité, dans laquelle la première extrémité est disposée dans l'alésage d'adaptation (21, 31) pour supporter de façon pivotante le bras de frein (2, 3)
un élément de fixation (50) attaché à la seconde extrémité de la gaine de fixation (14) pour fixer la gaine de fixation (14) à une base de fixation (1) attachée au cadre d'une bicyclette
un ressort de rappel (6, 7) disposé entre le bras de frein (2, 3) et la seconde extrémité de la gaine de fixation (14)
dans lequel une première extrémité (61, 71) du ressort de rappel (6, 7) est retenue sur le bras de frein (2, 3) et
dans lequel la seconde extrémité de la gaine de fixation (14) comprend un dispositif de retenue de seconde extrémité de ressort (52) pour retenir une seconde extrémité (62, 72) du ressort de rappel (6, 7) indépendamment de la base de fixation
**caractérisé en ce que** la gaine de fixation (14) comprend une partie généralement cylindrique (56) qui s'étend entièrement à travers le bras de frein (2).

2. Dispositif selon la revendication 1, dans lequel le ressort de rappel (6, 7) est enroulé autour de la partie cylindrique (56) de la gaine de fixation (14).

3. Dispositif selon l'une quelconque des revendications précédentes, dans lequel l'élément de fixation (50) comprend une broche.

4. Dispositif selon l'une quelconque des revendications précédentes, dans lequel la seconde extrémité de la gaine de fixation (14) comprend un élément s'étendant radialement (51) et dans lequel le dispositif de retenue de seconde extrémité de ressort (52) est disposé sur l'élément s'étendant radialement (51).

5. Dispositif selon la revendication 4, dans lequel l'élément s'étendant radialement (51) comprend une ouverture (52) dans laquelle la seconde extrémité du ressort (62, 72) est insérée, et dans lequel l'ouverture forme le dispositif de retenue de seconde extrémité de ressort (52).

6. Dispositif selon la revendication 5, dans lequel l'élément s'étendant radialement (51) comprend une pluralité des ouvertures (52), chacune d'entre elles étant adaptée pour recevoir la seconde extrémité de ressort (62, 72) à l'intérieur.

7. Dispositif selon l'une quelconque des revendications 4 à 6, dans lequel l'élément de fixation (50) comprend une broche de fixation (50).

8. Dispositif selon l'une quelconque des revendications 4 à 7, dans lequel la gaine de fixation (14) s'étend le long d'un axe longitudinal (X) et dans lequel l'élément s'étendant radialement (51) s'étend généralement perpendiculairement à l'axe longitudinal (X).

9. Dispositif selon la revendication 8, dans lequel l'élément de fixation (50) s'étend suivant une direction de l'axe longitudinal (X).

10. Dispositif selon l'une quelconque des revendications 4 à 9, dans lequel l'élément de fixation (50) s'étend généralement perpendiculairement à une surface latérale (54) de l'élément s'étendant radialement (51).

11. Dispositif selon l'une quelconque des revendications 4 à 10, dans lequel l'élément s'étendant radialement (51) est intégralement formé en une pièce avec la partie cylindrique (56).

12. Dispositif selon l'une quelconque des revendications précédentes, comprenant un élément de réglage d'écart de ressort (41) disposé dans le bras de frein (2), dans lequel l'élément de réglage d'écart de ressort (41) comprend un dispositif de retenue de première extrémité de ressort (41a) pour retenir la première extrémité (61) du ressort de rappel (6).

13. Dispositif selon la revendication 12, dans lequel l'élément de réglage d'écart de ressort (41) comprend un élément annulaire (41) monté autour de la partie cylindrique (56) de la gaine de fixation (14).

14. Dispositif selon la revendication 13, dans lequel l'élément annulaire comprend une ouverture (41a) dans laquelle la première extrémité de ressort (61) est insérée et dans lequel l'ouverture (41a) forme le dispositif de retenue de première extrémité (41a).

15. Dispositif selon l'une des revendications 13 ou 14, comprenant une vis de réglage (40) filetée dans le bras de frein (2) pour entrer en contact avec une butée (41b) formée sur l'élément annulaire (41) pour régler une position de rotation de l'élément annulaire (41).

16. Dispositif selon l'une quelconque des revendications précédentes, dans lequel la gaine de fixation (14) est sensiblement tubulaire.

17. Dispositif selon l'une quelconque des revendications précédentes, dans lequel la première extrémité de la gaine de fixation (14) s'étend entièrement à travers le bras de frein (2, 3).

18. Dispositif selon l'une quelconque des revendications précédentes, dans lequel la base de fixation (1) comprend un arbre tubulaire (12) ayant une surface périphérique interne filetée (15).

19. Dispositif selon la revendication 18, dans lequel la gaine de fixation (14) est montée de façon coaxiale autour de l'arbre tubulaire (12) de la base de fixation (1).

20. Dispositif selon la revendication 18 ou la revendication 19, dans lequel le ressort de rappel (6, 7) est enroulé autour de la gaine de fixation (14) entre le bras de frein (2, 3) et la base de fixation (1).

21. Dispositif selon l'une quelconque des revendications 18 à 20, dans lequel l'élément de fixation (50) s'étend dans un trou (59) formé dans la base de fixation (1).
